# EUROPÄISCHE PATENTSCHRIFT

(11) **EP 3 329 077 B1**
(45) Veröffentlichungstag und Bekanntmachung des Hinweises auf die Patenterteilung: **25.03.2020**
(21) Anmeldenummer: 16731892.2
(22) Anmeldetag: 23.06.2016
(51) Int. Cl.: E05F 11/38, E05F 15/689

(54) **VORRICHTUNG ZUR BEFESTIGUNG UND ELEKTRISCHEN KONTAKTIERUNG EINER FAHRZEUG-FENSTERSCHEIBE**
APPARATUS FOR FIXING AND CONTACTING ELECTRICALLY A VEHICLE WINDOW GLASS
APPAREIL POUR FIXER ET CONTACTER ÉLECTRIQUEMENT UNE VITRE DE FENÊTRE DE VÉHICULE

(30) Priorität: 29.07.2015 DE 102015214377
(43) Veröffentlichungstag der Anmeldung: 06.06.2018
(73) Patentinhaber: Saint-Gobain Glass France S.A., 92400 Courbevoie (FR)
(72) Erfinder: KLEIN, Marcel, 52499 Baesweiler (DE); DÖRNER, Dirk, 79312 Emmendingen (DE); REUL, Bernhard, 52134 Herzogenrath (DE); KUHNEN, Thorsten, 96123 Litzendorf (DE); CARL, Andre, 96450 Coburg (DE); SCHATKE, Silvio, 96250 Ebensfeld (DE); SCHULZ, Johannes, 96182 Reckendorf (DE); HEPPNER, Mathias, 96224 Burgkunstadt (DE); KRIESE, Olaf, 96450 Coburg (DE); ANGERMÜLLER, Melanie, 98646 Seidingstadt (DE)
(74) Vertreter: Obermair, Christian Egbert
(86) Internationale Anmeldenummer: PCT/EP2016/064572
(87) Internationale Veröffentlichungsnummer: WO 2017/016766

(56) Entgegenhaltungen:
- EP-A1- 2 801 689
- DE-A1-102013 003 532
- DE-A1-102013 003 533

## Beschreibung

Die Erfindung betrifft eine Vorrichtung zur Befestigung und elektrischen Kontaktierung einer Fahrzeug-Fensterscheibe, in die wenigstens ein elektrisches Funktionselement integriert ist.

Bei Kraftfahrzeugen, insbesondere bei Personenkraftfahrzeugen, kommen häufig Fahrzeug-Fensterscheiben (im Folgenden kurz als Fahrzeugscheiben bezeichnet) mit elektrischen Funktionselementen zum Einsatz. Bei derartigen Funktionselementen handelt es sich häufig um eine Scheibenheizung, wie sie bei den meisten Kraftfahrzeugen in einer Heckscheibe zum Einsatz kommt. Um auch Frontscheiben und gegebenenfalls auch Seitenscheiben in kurzer Zeit von niedergeschlagener und gegebenenfalls gefrorener Feuchtigkeit befreien zu können, kommen Scheibenheizungen in modernen Fahrzeugen bisweilen auch in Front- und Seitenscheiben zum Einsatz. Alternativ oder zusätzlich zu einer Scheibenheizung kommen teilweise aber auch anderweitige Funktionselemente in einer Fensterscheibe zum Einsatz. Dabei handelt es sich beispielsweise um sogenannte elektrotransparente, insbesondere elektrochrome Schichten, die bei Veränderung einer an die Schicht angelegten elektrischen Steuerspannung zu einem Farbwechsel (Abdunklung) oder einer Eintrübung der Fahrzeugscheibe führen - insbesondere im Hinblick auf Schutz vor Sonneneinstrahlung oder unerwünschtem Einblick in das Fahrzeug.

Elektrische Funktionselemente erfordern regelmäßig eine Kontaktierung mit einer zugeordneten Steuereinheit zur Ansteuerung und Energieversorgung. Häufig wird diese Kontaktierung dabei nach der Montage der jeweiligen Fahrzeugscheibe an der Fahrzeugkarosserie separat vorgenommen, beispielsweise indem ein scheibenseitiger Stecker mit einem (steuerungsseitigen) Gegenstecker verbunden oder scheibenseitige Anschlusskontakte fest (beispielsweise durch Löten) mit entsprechenden Kontakten der Steuereinheit verbunden werden. Derartige Vorrichtungen zur elektrischen Kontaktierung von beweglichen Fahrzeug-Fensterscheiben sind beispielsweise aus EP 2 801 689 A1 oder DE 10 2013 003 533 A1 bekannt.

Der Erfindung liegt die Aufgabe zugrunde, die Montage einer Fahrzeug-Fensterscheibe mit einem integrierten elektrischen Funktionselement an einer Fahrzeugkarosserie zu vereinfachen.

Diese Aufgabe wird erfindungsgemäß gelöst durch eine Vorrichtung mit den Merkmalen des Anspruchs 1. Weitere vorteilhafte und teils für sich erfinderische Ausführungsformen und Weiterbildungen der Erfindung sind in den Unteransprüchen sowie der nachfolgenden Beschreibung dargelegt.

Die erfindungsgemäße Vorrichtung dient zur Befestigung und elektrischen Kontaktierung einer Fahrzeug-Fensterscheibe (im Folgenden kurz: Fahrzeugscheibe), in die wenigstens ein elektrisches Funktionselement integriert ist. Die Vorrichtung (im Folgenden als Befestigungsvorrichtung bezeichnet) umfasst dabei einen Scheibenadapter, der zur (vorzugsweise irreversiblen) Fixierung an der Fahrzeugscheibe eingerichtet ist. Des Weiteren umfasst die Befestigungsvorrichtung einen Scheibenhalter, der zur Kopplung des Scheibenadapters mit einer Karosserie des Fahrzeugs (im Folgenden: Fahrzeugkarosserie) eingerichtet ist. Weiterhin umfasst die Befestigungsvorrichtung einen scheibenseitigen Stecker (im Folgenden kurz: Scheibenstecker), der im bestimmungsgemäßen Montagezustand mit dem Funktionselement der Fahrzeugscheibe elektrisch kontaktiert ist. Des Weiteren umfasst die Befestigungsvorrichtung einen scheibenseitigen Steckerschuh, der zur Lagerung des Scheibensteckers an der Fahrzeugscheibe eingerichtet und vorgesehen ist, und der im bestimmungsgemäßen Montagezustand mittelbar oder unmittelbar an der Fahrzeugscheibe fixiert ist. Außerdem umfasst die Befestigungsvorrichtung einen Gegenstecker, der dazu eingerichtet und vorgesehen ist, zur elektrischen Kontaktierung des Funktionselements mit einer Steuereinheit mit dem Scheibenstecker gekoppelt zu werden. Ferner umfasst die Befestigungsvorrichtung einen Steckerhalter zur Lagerung des Gegensteckers. Der Scheibenadapter und der scheibenseitige Steckerschuh sowie der Scheibenhalter und der den Gegenstecker lagernde Steckerhalter sind dabei derart kinematisch gekoppelt, dass bei einer Montage der Fahrzeugscheibe an der Fahrzeugkarosserie, d.h. bei der Montage der Fahrzeugscheibe mittels des Scheibenadapters an dem Scheibenhalter, der Scheibenstecker vorzugsweise selbsttätig (d. h. insbesondere ohne weiteres Zutun) mit dem Gegenstecker verbunden wird. Des Weiteren ist an dem scheibenseitigen Steckerschuh oder an dem Steckerhalter ein nachgiebiges Anschlagelement angeordnet, das dazu eingerichtet ist, bei der Montage der Fahrzeugscheibe eine Kopplungskraft zur bestimmungsgemäßen Kopplung des Scheibensteckers mit dem Gegenstecker aufzubringen. Außerdem sind im bestimmungsgemäßen Montagezustand (der Fahrzeugscheibe an der Fahrzeugkarosserie), der scheibenseitige Stecker und der Gegenstecker (zumindest entlang einer Montagerichtung, entlang derer die Fensterscheibe mit dem Scheibenhalter zu verbinden ist) an dem scheibenseitigen Steckerschuh oder an dem Steckerhalter spielbehaftet (d.h. zumindest geringfügig verschiebbar entlang der Montagerichtung) gelagert.

Diese spielbehaftete Lagerung wird insbesondere durch das nachgiebige Anschlagelement ermöglicht. Die spielbehaftete Lagerung erfolgt somit im bestimmungsgemäßen Montagezustand vorzugsweise stets an dem Bauteil (Steckerschuh oder Steckerhalter), an dem das nachgiebige Anschlagelement angeordnet ist. Das heißt, dass der Scheibenstecker spielbehaftet (verschiebbar, "schwimmend") an dem Steckerschuh gelagert (geführt ist), wenn das nachgiebige Anschlagelement an dem Steckerschuh angeordnet ist. Entsprechend ist in diesem Fall der Gegenstecker vorzugsweise spielfrei an dem (diesem zugeordneten) Steckerhalter gelagert, mittelbar über den Scheibenstecker aber spielbehaftet an dem Steckerschuh. In alternativer Ausführung erfolgt die spielbehaftete Lagerung im bestimmungsgemäßen Montagezustand vorzugsweise am Steckerhalter, wenn das nachgiebige Anschlagelement an diesem angeordnet ist. Entsprechend ist in letzterer Ausführungsvariante der Scheibenstecker insbesondere spielfrei an dem Steckerschuh gehaltert. Vorzugsweise ist der Scheibenstecker auch bereits im nicht vollständig bestimmungsgemäßen Montagezustand (sondern in einem teilweise montierten Zustand) der Fahrzeugscheibe (d. h. wenn diese noch nicht an der Fahrzeugkarosserie montiert ist) spielbehaftet an dem Steckerschuh gelagert (bzw. in alternativer Ausführung der Gegenstecker spielbehaftet an dem Steckerhalter).

Unter den Begriffen "Scheibenstecker" und "Gegenstecker" werden hier und im Folgenden insbesondere zueinander korrespondierende Bauteile verstanden, die einerseits zur elektrischen Kontaktierung erforderliche elektrische Kontakte umfassen, als auch andererseits einen die Anschlusskontakte umgebenden Steckerkörper, der zur vorzugsweise mediendichten und insbesondere verliersicheren Kopplung (Verbindung) mit dem Steckerkörper des entsprechend anderen Bauteils ausgebildet ist. Grundsätzlich kann die verliersichere Kopplung dabei im Rahmen der Erfindung durch einen Reibschluss zwischen dem Scheibenstecker und dem Gegenstecker (d. h. insbesondere zwischen deren Steckerkörpern) ausgebildet sein, wobei die zur Trennung der Kopplung erforderliche Trennkraft (d.h. die zwischen den Steckerkörpern vorliegende Reibkraft) vorzugsweise größer ist als im Betrieb eines Fahrzeugs üblicherweise an derartigen Steckern auftretende Kräfte. Bevorzugt weisen der Scheibenstecker und der Gegenstecker allerdings korrespondierende Rastelemente auf, mittels derer sie im bestimmungsgemäßen Montagezustand insbesondere formschlüssig miteinander verrastet sind.

Aufgrund der kinematischen Kopplung des Scheibenadapters mit dem Steckerschuh sowie des Steckerhalters mit dem Scheibenhalter ist vorteilhafterweise eine "Blindmontage" der Fahrzeugscheibe an der Fahrzeugkarosserie ermöglicht. Das heißt, dass ein Monteur bei der Montage der Fahrzeugscheibe nicht darauf zu achten braucht, dass neben der Kopplung des Scheibenadapters mit dem Scheibenhalter auch der Scheibenstecker mit dem Gegenstecker koppelt, sondern kann vielmehr die Scheibe in einem Arbeitsschritt und insbesondere auf einfache Weise in die Fahrzeugkarosserie bzw. in den Scheibenhalter einsetzen - die elektrische Kontaktierung des Funktionselements erfolgt dabei selbsttätig ("von selbst"). Somit entfällt vorteilhafterweise ein zusätzlicher Arbeitsschritt zur elektrischen Kontaktierung, wodurch die Montage der Fahrzeugscheibe vereinfacht wird.

Dadurch, dass der Scheibenstecker und der mit diesem gekoppelte Gegenstecker im bestimmungsgemäßen Montagezustand spielbehaftet gelagert sind, wird außerdem vorteilhafterweise verhindert, dass im Betrieb des Fahrzeugs (beispielsweise insbesondere beim Befahren einer unebenen, "holprigen" Fahrbahn) Relativbewegungen zwischen der Fahrzeugscheibe und dem Scheibenhalter, die häufig aufgrund von Fertigungstoleranzen unvermeidlich sind, nicht auf die elektrischen Anschlusskontakte des Gegensteckers bzw. des Scheibensteckers übertragen werden. Vielmehr können sich die miteinander gekoppelten Stecker (d.h. der Scheibenstecker und der Gegenstecker) bei derartigen Relativbewegungen gemeinsam entlang des Steckerschuhs (bzw. des Steckerhalters) bewegen. Dadurch wird vorteilhafterweise ein Verschleiß der elektrischen Kontakte sowie eine unerwünschte Trennung des Scheibensteckers von dem Gegenstecker vermieden und somit die Funktionssicherheit des in die Fahrzeugscheibe integrierten Funktionselements erhöht.

In einer bevorzugten Ausführungsform ist das nachgiebige Anschlagelement insbesondere an dem Steckerschuh angeordnet. Das heißt, dass im bestimmungsgemäßen Montagezustand der Scheibenstecker (und der daran gekoppelte Gegenstecker) spielbehaftet an dem Steckerschuh gelagert ist. Der Steckerschuh ist dabei vorzugsweise als eine Art "Führungshülse" ausgeführt, die entlang der Montagerichtung ausgerichtet ist und in der der Scheibenstecker (vorzugsweise auch im teilmontierten Zustand) entlang der Montagerichtung verschiebbar angeordnet ist. Das nachgiebige Anschlagelement bildet dabei einen den Verschiebeweg des Scheibensteckers in Richtung zur Fahrzeugscheibe hin begrenzenden Anschlag, gegen den der Scheibenstecker bei der Kopplung mit dem Gegenstecker aufläuft. D.h. der Scheibenstecker wird bei der Montage von dem Gegenstecker gegen diesen Anschlag verschoben. Dadurch wird die zur Kopplung des Scheibensteckers mit dem Gegenstecker erforderliche Kopplungskraft aufgebaut.

In einer zweckmäßigen Ausführung ist das nachgiebige Anschlagelement derart ausgebildet, dass die Kopplungskraft, die zur bestimmungsgemäßen Kopplung des Scheibensteckers mit dem Gegenstecker erforderlich ist, geringer ist als eine zum Erreichen des bestimmungsgemäßen Montagezustands der Fahrzeugscheibe an der Fahrzeugkarosserie erforderliche Montagekraft. Das heißt, dass das nachgiebige Anschlagelement insbesondere derart ausgebildet ist, dass bei der Montage der Fahrzeugscheibe zunächst die Kopplungskraft zur bestimmungsgemäßen Kopplung des Scheibensteckers mit dem Gegenstecker gegen das nachgiebige Anschlagelement aufgewendet werden muss und im Anschluss daran - zur Ausbildung des bestimmungsgemäßen Montagezustands der Fahrzeugscheibe - eine die Kopplungskraft überschreitende Montagekraft überwunden werden muss. Diese Montagekraft resultiert dabei beispielsweise ebenfalls aus einer Widerstandskraft des nachgiebigen Anschlagelements gegen Verformung. Dadurch wird vorteilhafterweise erreicht, dass der Scheibenstecker und der Gegenstecker bestimmungsgemäß gekoppelt sind, bevor die Fahrzeugscheibe bestimmungsgemäß an der Fahrzeugkarosserie montiert ist. Somit kann auf einfache Weise vermieden werden, dass der Scheibenstecker mit dem Gegenstecker im bestimmungsgemäßen Montagezustand der Fahrzeugscheibe nur unzureichend gekoppelt ist.

In einer besonders zweckmäßigen Ausführung sind der Scheibenadapter und der Scheibenhalter derart gestaltet, dass bei Erreichen der erforderlichen Montagekraft eine Verrastung (d.h. formschlüssige Kopplung) zwischen dem Scheibenadapter und dem Scheibenhalter ausgebildet wird. Dazu weisen der Scheibenadapter und der Scheibenhalter vorzugsweise korrespondierende Rastelemente auf, die bei Erreichen der Montagekraft miteinander formschlüssig verrasten. Beispielsweise resultiert die zur Verrastung erforderliche Montagekraft in diesem Fall aus einer konstruktiven Gestaltung der Rastelemente, d. h. aus einer Widerstandskraft der Rastelemente gegen Bewegung. Alternativ beruht die Montagekraft auf der Widerstandskraft des nachgiebigen Anschlagelements, bevorzugt aber auf einer Kombination der Widerstandskraft der Rastelemente und des nachgiebigen Anschlagelements.

Um bei der Montage der Fahrzeugscheibe an der Fahrzeugkarosserie eine besonders einfache Kontrolle des bestimmungsgemäßen Montagezustands zu ermöglichen, ist das nachgiebige Anschlagelement in einer vorteilhaften Ausführung dazu eingerichtet und vorgesehen, zur Signalisierung des bestimmungsgemäßen Montagezustands der Fahrzeugscheibe an der Fahrzeugkarosserie eine akustische und/oder haptische Rückmeldung (insbesondere an den Monteur der Fahrzeugscheibe) auszugeben. Bei der akustischen Rückmeldung handelt es sich dabei vorzugsweise um ein Knack- oder Klackgeräusch. Bei der haptischen Rückmeldung handelt es sich beispielsweise um eine beim Erreichen der erforderlichen Montagekraft auftretende Kraftspitze mit einem anschließenden signifikanten Nachlassen der bei der Montage auftretenden Gegenkraft.

In einer bevorzugten Ausführung ist das nachgiebige Anschlagelement derart ausgebildet, dass im bestimmungsgemäßen Montagezustand der Fahrzeugscheibe an der Fahrzeugkarosserie die spielbehaftete Lagerung des Scheibensteckers sowie des Gegensteckers (insbesondere an dem Steckerschuh) entlang der Montagerichtung der Fahrzeugscheibe zumindest in einem Bereich von etwa 1 bis 3 mm näherungsweise (d.h. bis auf vernachlässigbare, reibungsbasierte Kraftanteile) kraftfrei ist. Mit anderen Worten gibt das Anschlagelement den Scheibenstecker und den damit gekoppelten Gegenstecker in der bestimmungsgemäßen Montageposition frei (ist also von diesen "entkoppelt"), so dass sich der Gegenstecker und der Scheibenstecker im bestimmungsgemäßen Montagezustand sowohl in Richtung auf die Fahrzeugscheibe als auch von dieser weg insbesondere mit einem Spiel von etwa 1 mm bis 3 mm bewegen können. Dadurch wird bei Relativbewegungen zwischen der Fahrzeugscheibe und dem Scheibenhalter, die im bestimmungsgemäßen Montagezustand häufig insbesondere konstruktionsbedingt entlang der Montagerichtung der Fahrzeugscheibe verlaufen, keine Kraft auf die Verbindung zwischen dem Scheibenstecker und dem Gegenstecker ausgeübt.

In einer grundsätzlich im Rahmen der Erfindung denkbaren Ausführungsform handelt es sich bei dem nachgiebigen Anschlagelement um wenigstens einen zapfenartigen Vorsprung, der vorzugsweise (spritzgießtechnisch) einstückig mit dem Steckerschuh (oder gegebenenfalls dem Steckerhalter) verbunden ist und derart konstruktiv gestaltet ist, dass dieser bei Erreichen der erforderlichen Montagekraft von dem Steckerschuh (oder dem Steckerhalter) abbricht und somit eine Bewegung des Scheibensteckers (sowie des mit diesem gekoppelten Gegensteckers) über den ursprünglich von dem Vorsprung gebildeten Anschlag hinaus ermöglicht.

In einer besonders bevorzugten Ausführungsform handelt es sich bei dem Anschlagelement jedoch um eine Feder. Der Einsatz der Feder ermöglicht dabei vorteilhafterweise ein wiederholtes Aufbringen der Kopplungskraft sowie gegebenenfalls der Montagekraft, insbesondere für den Fall, dass die Fahrzeugscheibe beispielsweise aufgrund von Beschädigung getauscht werden muss.

In einer weiteren bevorzugten Ausführung, die insbesondere für den Fall vorteilhaft ist, dass im bestimmungsgemäßen Montagezustand der Scheibenstecker und der damit gekoppelte Gegenstecker kraftfrei in dem Steckerschuh (oder gegebenenfalls an dem Steckerhalter) gelagert sind, ist die Feder insbesondere bistabil ausgebildet. Bistabil bedeutet hierbei, dass die Feder zwei stabile Zustände aufweist, in denen sie jeweils unterschiedliche Positionen entlang der Montagerichtung einnimmt. Die Feder ist dabei insbesondere etwa nach Art eines "Knackfroschs" ausgebildet. In ihrem ersten Zustand ist die Feder dabei vorzugsweise derart an dem Steckerschuh (oder gegebenenfalls dem Steckerhalter) angeordnet, dass sie den vorstehend beschriebenen Anschlag zur Kopplung des Scheibensteckers mit dem Gegenstecker bildet. In dieser ersten Federposition läuft bei der Montage der Fahrzeugscheibe der Scheibenstecker (oder gegebenenfalls der Gegenstecker) gegen die Feder an, sodass die Kopplungskraft ausgebildet wird. Deshalb wird diese erste Federposition auch als Anschlagposition bezeichnet. Bei Erreichen der Montagekraft (die von dem mit dem Gegenstecker gekoppelten Scheibenstecker auf die Feder übertragen wird) schlägt die Feder in ihren zweiten Zustand und damit in eine zweite Federposition (auch als "Freigabeposition" bezeichnet) um. In dieser Freigabeposition ist die Feder insbesondere von dem Scheibenstecker und dem mit diesem gekoppelten Gegenstecker entkoppelt, so dass die beiden Stecker mit Spiel gelagert sind. Für den Fall, dass die Feder an dem Steckerschuh angeordnet ist, ist diese in der Freigabeposition zweckmäßigerweise mit geringerem Abstand zu der Fahrzeugscheibe angeordnet als in der Anschlagposition. Zweckmäßigerweise ist die Feder als insbesondere bügelartig oder jochartig gebogenes (gewölbtes) Federband ausgebildet, das in der Anschlagposition zu dem Scheibenstecker bzw. zu dem Gegenstecker hingewölbt und in der Freigabeposition von diesen weggewölbt ist. Beim Umschlagen von dem ersten Zustand in den zweiten Zustand gibt die Feder außerdem vorzugsweise nach Art eines Knackfroschs als akustische Rückmeldung ein Knackgeräusch aus.

In einer zweckmäßigen Ausführung sind der Scheibenadapter einteilig mit dem scheibenseitigen Steckerschuh und der Scheibenhalter einteilig mit dem Steckerhalter für den Gegenstecker verbunden. Insbesondere handelt es sich dabei jeweils um spritzgießtechnisch hergestellte Kunststoffbauteile. Dadurch kann weiter Montageaufwand eingespart werden, da jeweils nur ein Bauteil an der Fahrzeugscheibe bzw. an der Fahrzeugkarosserie befestigt zu werden braucht.

In einer im Rahmen der Erfindung denkbaren alternativen Ausführung sind der Scheibenadapter und der Steckerschuh sowie der Scheibenhalter und der Steckerhalter als voneinander separate Bauteile ausgeführt und bei der Montage mittels der Fahrzeugscheibe bzw. angrenzenden Karosseriebauteilen jeweils miteinander (kinematisch) gekoppelt.

In einer weiteren alternativen Ausführung sind der Scheibenadapter und der Steckerschuh sowie der Scheibenhalter und der Steckerhalter ebenfalls jeweils separat ausgeführt. In diesem Fall weisen aber vorzugsweise der Scheibenadapter Verbindungsmittel zur Verbindung mit dem Steckerschuh und entsprechend der Scheibenhalter Verbindungsmittel zur Verbindung mit dem Steckerhalter auf, sodass für Fahrzeugscheiben ohne elektrisches Funktionselement lediglich der Scheibenadapter und der Scheibenhalter eingesetzt werden können. Für Fahrzeugscheiben mit elektrischem Funktionselement werden hierbei der Scheibenadapter und der Scheibenhalter zweckmäßigerweise jeweils um den Steckerschuh (mit dem darin gelagerten Scheibenstecker) bzw. dem Steckerhalter (mit dem daran gelagerten Gegenstecker) erweitert.

In einer weiteren zweckmäßigen Ausführung ist der Scheibenstecker im bestimmungsgemäßen Montagezustand (und vorzugsweise auch im bestimmungsgemäßen "Vormontagezustand", d.h. wenn nur der Scheibenstecker an der Fahrzeugscheibe montiert ist) derart mit dem Funktionselement der Fahrzeugscheibe elektrisch kontaktiert, dass eine Relativbewegung zwischen dem Scheibenstecker und der Fahrzeugscheibe möglich ist. Dies ist insbesondere für den Fall vorteilhaft, dass der Scheibenstecker spielbehaftet in dem (scheibenseitigen) Steckerschuh gelagert ist. Die Kontaktierung des Scheibensteckers mit dem Funktionselement ist dabei vorteilhafterweise derart gestaltet, dass bei Relativbewegungen zwischen dem Scheibenstecker und der Fahrzeugscheibe eine Krafteinwirkung auf die Kontaktstellen zwischen dem Scheibenstecker und dem Funktionselement oder ein Verschleiß dieser Kontaktstellen vermieden wird oder unterbunden ist. Vorzugsweise ist das Funktionselement der Fahrzeugscheibe dazu mit einem als Folienleiter bezeichneten Flachleiter kontaktiert. Dieser Folienleiter trägt dabei insbesondere mehrere schichtartig ausgebildete Leiterbahnen zur Kontaktierung mit dem Scheibenstecker. Zweckmäßigerweise ist dieser Folienleiter zwischen der Fahrzeugscheibe und dem Scheibenstecker wenigstens einfach mäanderartig umgeschlagen, sodass nach Art eines "Schlappseils" eine "Schlapplänge" zum Ausgleich von Relativbewegungen zwischen dem Scheibenstecker und der Fahrzeugscheibe gebildet ist. Der Folienleiter ist wiederum vorzugsweise mittels eines "zero-insert-force-connectors" auf den Scheibenstecker geführt. Alternativ sind die Anschlusskontakte des Scheibensteckers fest mit den Leiterbahnen des Folienleiters verbunden, insbesondere verlötet. Mit dem Funktionselement ist der Folienleiter beispielsweise unlösbar verbunden (z. B. verlötet oder leitfähig verklebt). Alternativ ist der Folienleiter oder ein andersartiges Anschlusskabel scheibenseitig in einem schwimmend mit dem Scheibenadapter verbundenen Kontakthalter gehaltert. Dieser Kontakthalter weist vorzugsweise flexible Federkontakte auf, die von dem Kontakthalter auf das Funktionselement, insbesondere auf dessen elektrisch leitfähige Bestandteile, aufgedrückt werden. Die schwimmende Verbindung des Kontakthalters mit dem Scheibenadapter ist vorteilhafterweise derart gestaltet, dass eine Kontaktkraft zwischen den Kontaktfedern und dem Funktionselement aufgebracht wird, aber dass gleichzeitig der Kontakthalter zumindest quer zu dieser Kontaktkraft nahezu vollständig von Bewegungen zwischen dem Scheibenadapter und der Fahrzeugscheibe oder dem Folienleiter (bzw. dem Anschlusskabel) entkoppelt ist.

In einer weiteren zweckmäßigen Ausführung weist der Scheibenadapter und/oder der Scheibenhalter wenigstens einen Führungssteg mit einer oder mehreren Auflaufschrägen zur Zentrierung des Scheibenadapters gegenüber dem Scheibenhalter bei der Montage auf. Vorzugsweise weist dabei der Scheibenadapter insbesondere zwei Führungsstege mit jeweils einer Auflaufschräge auf, zwischen die der Scheibenhalter bei der Montage zur Begrenzung eines Spiels quer zur Montagerichtung eingeschoben wird. Der Scheibenhalter weist dabei zu den Auflaufschrägen der beiden Führungsstege komplementäre Einführschrägen auf. Weiterhin bevorzugt weist auch der Steckerschuh Einführschrägen zur Zentrierung des Gegensteckers bei der Montage auf. Durch die Auflaufschrägen bzw. die Einführschrägen sowie durch die Führungsstege werden vorteilhafterweise fertigungsbedingte Toleranzen in der kinematischen Kopplung des Scheibenhalters mit dem Steckerhalter bzw. des Scheibenadapters mit dem Steckerschuh ausgeglichen und somit eine Blindmontageweiter vereinfacht.

Grundsätzlich kann es sich bei der Fahrzeugscheibe im Rahmen der Erfindung um eine Windschutzscheibe oder eine Heckscheibe des Fahrzeugs handeln. Vorzugsweise handelt es sich bei der Fahrzeugscheibe aber um eine verstellbare Seitenscheibe. In diesem Fall ist der Scheibenhalter in einer bevorzugten Ausführung zur beweglichen (insbesondere verschiebbaren) Kopplung der Fahrzeugscheibe mit der Karosserie, insbesondere mit einer Fensterhebermechanik des Fahrzeugs eingerichtet und vorgesehen. Bei dem Scheibenhalter handelt es sich hierbei vorzugsweise um ein (auch als Scheibenmitnehmer bezeichnetes) Führungselement, das im bestimmungsgemäßen Montagezustand einen Teil der Fensterhebermechanik bildet. Der Scheibenhalter dient in diesem Fall insbesondere zur Führung der Fahrzeugscheibe zwischen einer Schließstellung und einer Offenstellung.

Nachfolgend werden Ausführungsbeispiele der Erfindung anhand einer Zeichnung näher erläutert. Darin zeigen:
- Fig. 1: in einer schematischen Perspektivdarstellung eine Vorrichtung zur Befestigung und elektrischen Kontaktierung einer Fahrzeug-Fensterscheibe in einem unmontierten Zustand,
- Fig. 2: in Ansicht gemäß Fig. 1 die Vorrichtung in einem bestimmungsgemäßen Montagezustand,
- Fig. 3: in schematischer Draufsicht in teilweise aufgebrochener Darstellung die Vorrichtung in einem ersten Montageschritt,

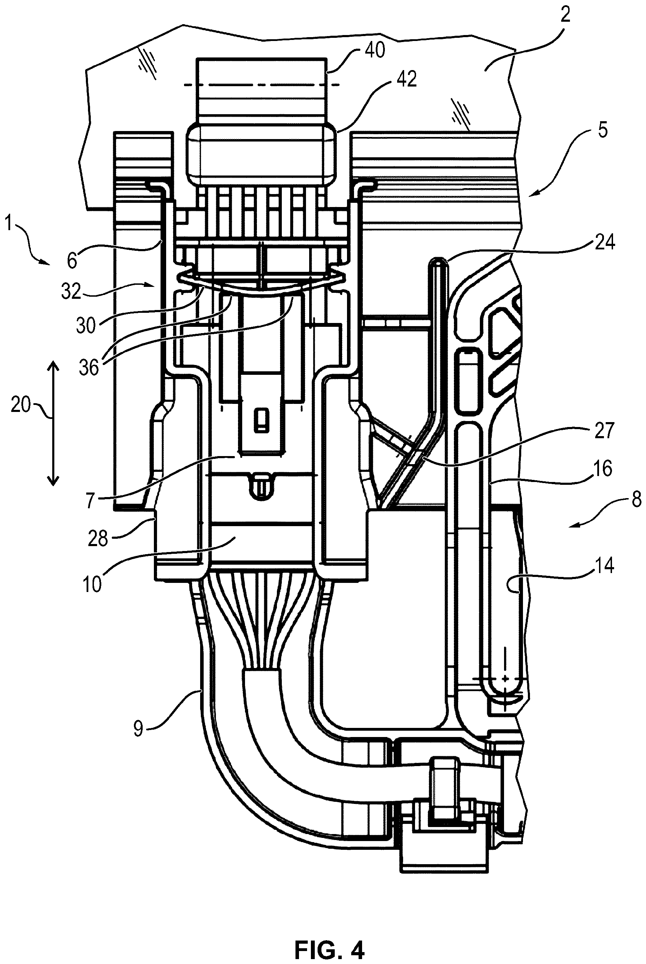

- Fig. 4: in Ansicht gemäß Fig. 3 die Vorrichtung in einem zweiten Montageschritt,
- Fig. 5: in Ansicht gemäß Fig. 3 die Vorrichtung in einem dritten Montageschrift,
- Fig. 6: in Ansicht gemäß Fig. 3 die Vorrichtung im bestimmungsgemäßen Montagezustand,

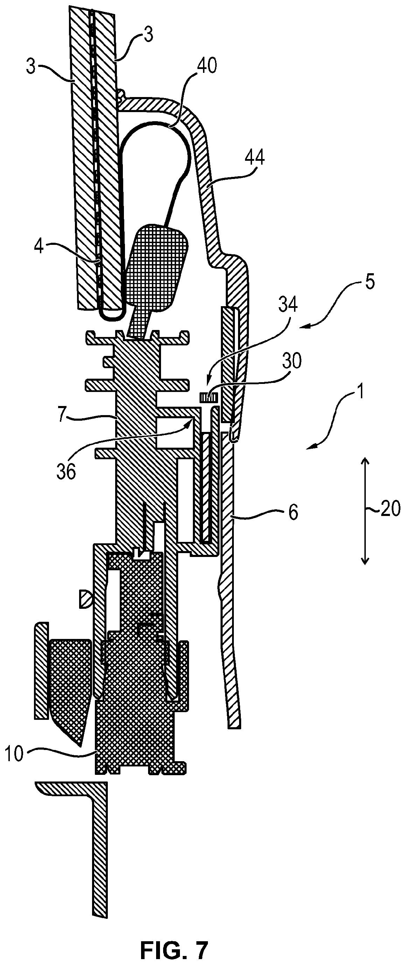

- Fig. 7: in einer Schnittdarstellung VII-VII gemäß Fig. 6 die Vorrichtung,
- Fig. 8 und Fig. 9: in schematischer Draufsicht jeweils zwei Bauteile der Vorrichtung gemäß einem alternativen Ausführungsbeispiel.

Einander entsprechende Teile sind in allen Figuren stets mit gleichen Bezugszeichen versehen.

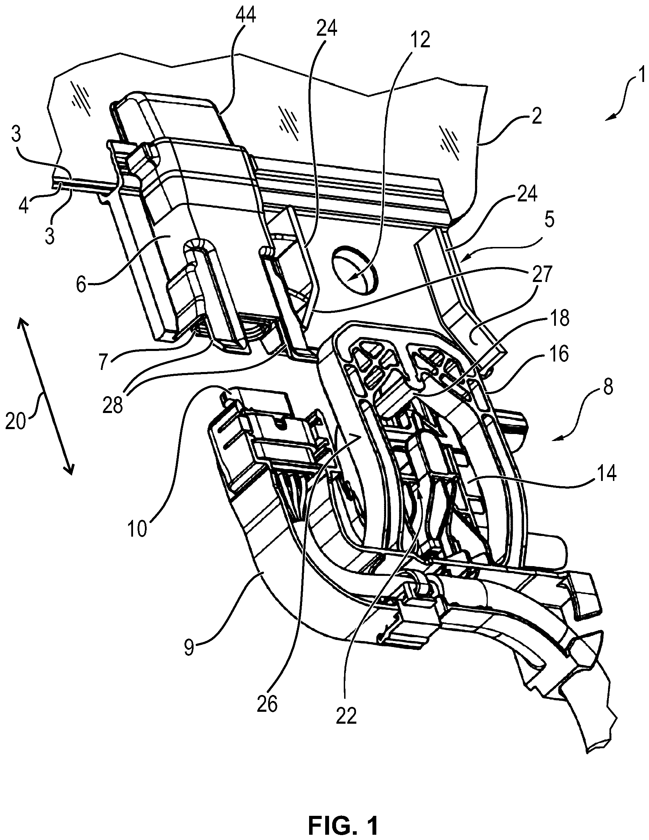

In Fig. 1 ist eine Vorrichtung zur Befestigung (im Folgenden als Befestigungsvorrichtung 1 bezeichnet) einer lediglich teilweise dargestellten Fahrzeug-Fensterscheibe (im Folgenden kurz als Fahrzeugscheibe 2 bezeichnet) dargestellt. Bei der Fahrzeugscheibe 2 handelt es sich konkret um eine Seitenscheibe eines Fahrzeugs, die dazu eingerichtet ist, in einer (Seiten-)Tür des Fahrzeugs mittels eines (elektrischen) Fensterhebers verschiebbar gelagert zu sein. In die Fahrzeugscheibe 2 ist sandwichartig zwischen zwei Scheibenelementen 3 ein Funktionselement 4 (im vorliegenden Ausführungsbeispiel eine elektrochrome Schicht zur variablen Abdunkelung der Fahrzeugscheibe 2) integriert. Die Befestigungsvorrichtung 1 dient in diesem Fall sowohl zur mechanischen Kopplung der Fahrzeugscheibe 2 in der Tür des Fahrzeugs sowie zur elektrischen Kontaktierung des Funktionselements 4 mit einer diesem zugeordneten Steuereinheit. Dazu umfasst das Befestigungselement 1 zwei Baugruppen, wovon eine Baugruppe der Fahrzeugscheibe 2 und die andere Baugruppe der Fahrzeugkarosserie, konkret dem Fensterheber, zugeordnet ist.

Die scheibenseitige Baugruppe umfasst dabei ein als Scheibenadapter 5 bezeichnetes Element, das im in Fig. 1 dargestellten teilmontierten Zustand fest mit der Fahrzeugscheibe 2 (konkret mittels einer Klebeverbindung) verbunden ist. Des Weiteren umfasst die scheibenseitige Baugruppe ein als Steckerschuh 6 bezeichnetes Führungsgehäuse für einen (ebenfalls der scheibenseitigen Baugruppe zugeordneten) Scheibenstecker 7. Die fensterheberseitige Baugruppe umfasst ein als Scheibenmitnehmer 8 (oder auch als Scheibenhalter) bezeichnetes Halteelement, das zur Halterung der Fahrzeugscheibe 2 und zur Kraftübertragung von dem Fensterheber auf die Fahrzeugscheibe 2 dient. Des Weiteren umfasst die fensterheberseitige Baugruppe einen Steckerhalter 9 sowie einen in dem Steckerhalter 9 angeordneten und als "Gegenstecker" 10 bezeichneten Stecker. Der Steckerhalter 9 ist in dem vorliegenden Ausführungsbeispiel einstückig mit dem Scheibenmitnehmer 8 als Spritzgießbauteil aus Kunststoff gefertigt. Ebenso ist der Scheibenadapter 5 mit dem Steckerschuh 6 einstückig und spritzgießtechnisch als Kunststoffbauteil ausgebildet.

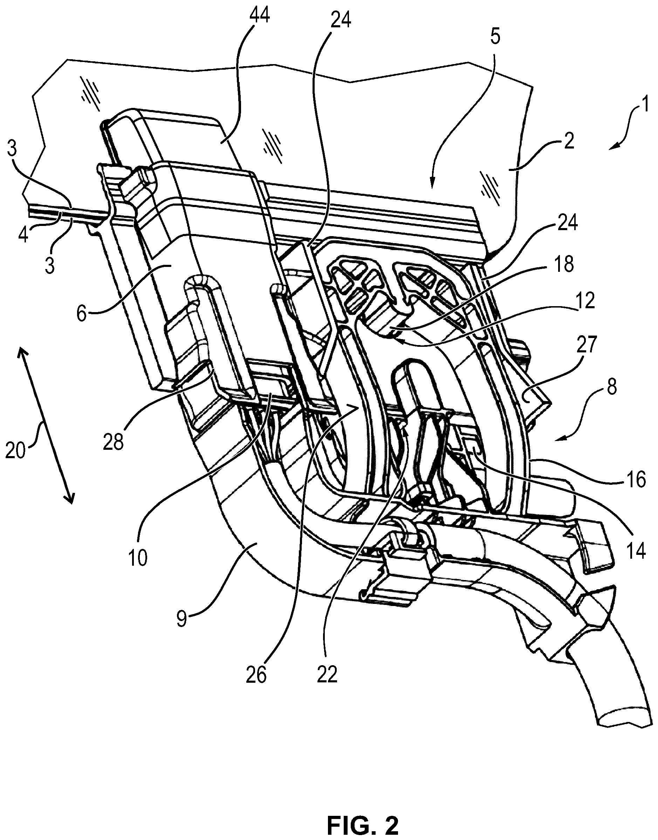

Zur mechanischen Kopplung zwischen dem Scheibenadapter 5 und dem Scheibenhalter 8 weist der Scheibenadapter 5 einen als "Rastauge 12" bezeichneten Durchbruch auf. Der Scheibenmitnehmer 8 weist zur mechanischen Kopplung ein Unterteil 14 und ein Oberteil 16 auf, die sich greiferartig gegenüberliegen und im bestimmungsgemäßen Montagezustand gemäß Fig. 2 den Scheibenadapter 5 an dessen Ober- und Unterseite umgreifen. An dem Oberteil 16 ist dabei ein Rastvorsprung 18 ausgebildet, der im bestimmungsgemäßen Montagezustand gemäß Fig. 2 in das Rastauge 12 des Scheibenadapters 5 eingreift. Zur Montage wird die Fahrzeugscheibe 2 mit dem Scheibenadapter 5 entlang einer Montagerichtung 20 zwischen das Unterteil 14 und das Oberteil 16 des Scheibenmitnehmers 8 eingeschoben. Der Rastvorsprung 18 dient dabei zur Verrastung des Scheibenmitnehmers 8 an dem Scheibenadapter 5 gegen eine Trennung. Zur Begrenzung des Einschiebewegs des Scheibenadapters 5 in den Scheibenmitnehmer 8 ist an dem Scheibenmitnehmer 8 eine Anschlagschulter 22 ausgebildet.

Um bei der Montage der Fahrzeugscheibe 2 den Scheibenmitnehmer 8 zu dem Scheibenadapter 5, konkret den Rastvorsprung 18 zu dem Rastauge 12 auszurichten, sind an dem Scheibenadapter 5 zwei Führungsstege 24 angeordnet, die bei der Montage mit seitlich an dem Oberteil 16 ausgebildeten Führungsflächen 26 zur Führung des Scheibenmitnehmers 8 in Montagerichtung 20 zusammenwirken. Zur Vereinfachung der Montage ist der zwischen den Führungsstegen 24 liegende Zwischenraum durch an dem Scheibenmitnehmer 8 zugewandten Enden der Führungsstege 24 angeordnete Auflaufschrägen 27 trichterartig erweitert. Das Oberteil 16 weist an seinem Freiende korrespondierend ausgebildete Einführschrägen auf, sodass beim Einsetzen des Scheibenadapters 5 in den Scheibenmitnehmer 8 ein geringfügiger Versatz quer zur Montagerichtung 20 ausgeglichen werden kann.

Durch die einstückige Ausführung des Steckerhalters 9 mit dem Scheibenmitnehmer 8 bzw. des Steckerschuhs 6 mit dem Scheibenadapter 5 wird bei der Montage der Fahrzeugscheibe 2 eine selbsttätige Kontaktierung des Funktionselements 4 mit der dieser zugeordneten Steuereinheit ermöglicht. Konkret werden bei der Montage der Fahrzeugscheibe 2 der Gegenstecker 10 und der Scheibenstecker 7 selbsttätig (d.h. ohne weiteres Zutun eines Monteurs) miteinander gekoppelt und dabei die elektrische Kontaktierung ausgebildet. Zur weiteren Vereinfachung der Montage sind - wie aus Fig. 1 und Fig. 2 ersichtlich ist - auch an dem Steckerschuh 6 zwei Führungsstege 28 mit endseitigen Einführschrägen ausgebildet.

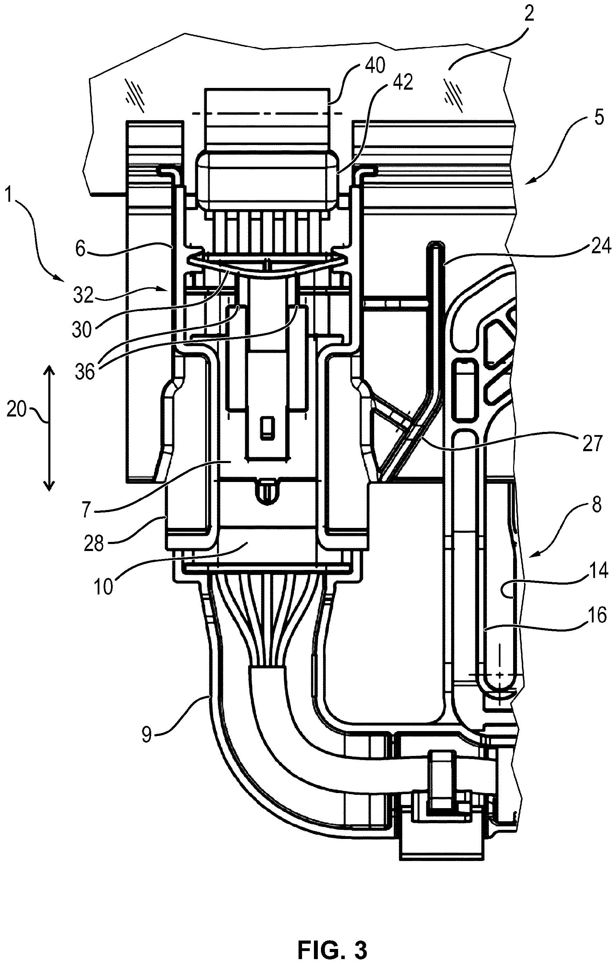

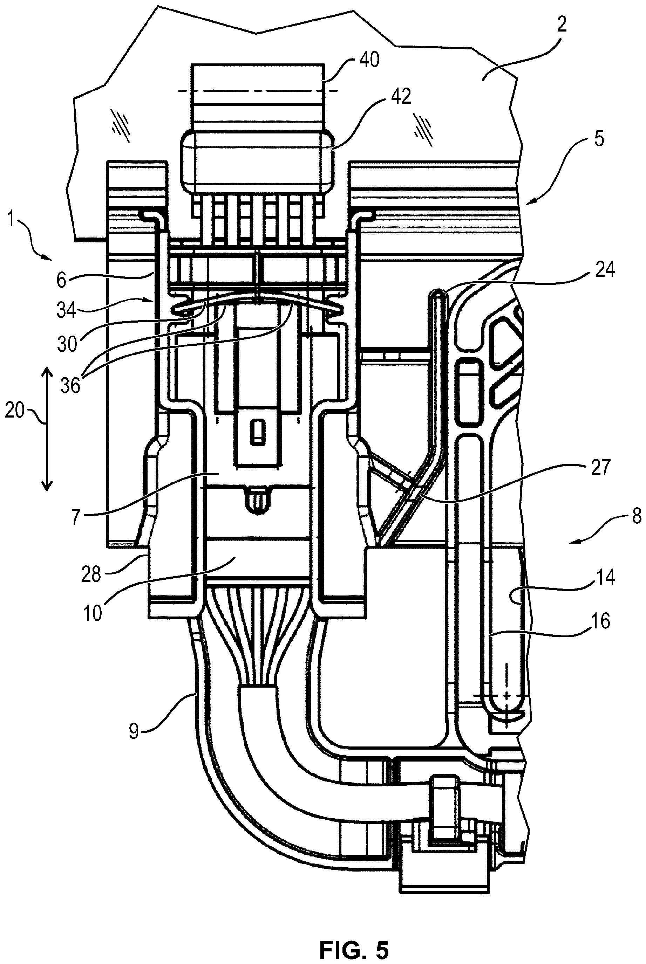

Um eine Auswirkung von Relativbewegungen zwischen der Fahrzeugscheibe 2 und dem Scheibenmitnehmer 8 parallel zur Montagerichtung 20 auf die Anschlusskontakte des Scheibensteckers 7 und des Gegensteckers 10 gering zu halten, konkret um Verschleiß zu unterbinden, ist der Scheibenstecker 7 im bestimmungsgemäßen Montagezustand gemäß Fig. 2 entlang der Montagerichtung 20 beweglich, d.h. spielbehaftet, in dem Steckerschuh 6 gelagert. Damit ist auch der im bestimmungsgemäßen Montagezustand mit dem Scheibenstecker 7 gekoppelte Gegenstecker 10 beweglich gegenüber dem Steckerschuh 6 gelagert. Um dennoch eine verliersichere Kopplung des Scheibensteckers 7 mit dem Gegenstecker 10 bei der Montage der Fahrzeugscheibe 2 zu ermöglichen, ist in dem Steckerschuh 6 ein nachgiebiges Anschlagelement in Form einer bistabilen Feder 30 angeordnet (siehe Fig. 3). Die bistabile Feder 30 weist dabei in ihrem ersten (stabilen) Federzustand eine als Anschlagposition 32 bezeichnete Stellung auf, in der die bügelartig gewölbte Feder 30 entlang der Montagerichtung 20 in Richtung auf den Scheibenstecker 7 vorgewölbt ist (siehe Fig.3). In ihrem zweiten Federzustand nimmt die Feder 30 eine als Freigabeposition 34 bezeichnete Federstellung ein, in der sie in Richtung auf die Fahrzeugscheibe 2 gewölbt ist (siehe Fig. 5).

Bei der Montage der Fahrzeugscheibe 2 wird nun in einem ersten Montageschritt (vgl. Fig. 3) der Scheibenadapter 5 zwischen das Unterteil 14 und das Oberteil 16 des Scheibenmitnehmers 8 eingeschoben und dabei mittels der Führungsstege 24 zentriert. Dabei wird auch der Steckerhalter 9 mit dem daran angeordneten Gegenstecker 10 mittels der Führungsstege 28 des Steckerschuhs 6 zu diesem zentriert und der Scheibenstecker 7 kommt in Kontakt mit dem Gegenstecker 10. Beim weiteren Einschieben der Fahrzeugscheibe 2 bzw. des Scheibenadapters 5 in den Scheibenmitnehmer 8 wird der - beweglich in dem Steckerschuh 6 geführte - Scheibenstecker 7 von dem Gegenstecker 10 weiter entlang der Montagerichtung 20 in den Steckerschuh 6 eingeschoben, bis der Scheibenstecker 7 mit (rückseitig angeordneten) Schultern 36 gegen die Feder 30 aufläuft (d.h. an dieser anschlägt). Dabei wird von der Feder 30 (beim weiteren Einschieben der Fahrzeugscheibe 2) eine Widerstandskraft auf den Scheibenstecker 7 aufgebracht, die dazu führt, dass der Scheibenstecker 7 mit dem Gegenstecker 10 mittels nicht näher dargestellter Rastelemente verrastet. Die zum Verrasten des Scheibensteckers 7 mit dem Gegenstecker 10 erforderliche, gegen die Feder 30 aufzubringende, Kraft wird auch als Kopplungskraft bezeichnet. Die Kopplungskraft ist dabei geringer als eine zum Umschlagen der Feder 30 von der Anschlagposition 32 in die Freigabeposition 34 erforderliche Kraft.

Die Anschlagposition 32 der Feder 30 ist dabei derart gewählt, dass der Rastvorsprung 18 des Scheibenmitnehmers 8 noch nicht in das Rastauge 12 des Scheibenadapters 5 einrasten kann. Dadurch wird vorteilhafterweise erreicht, dass bei der Montage der Fahrzeugscheibe 2 zuerst die Kopplung des Scheibensteckers 7 mit dem Gegenstecker 10 und damit die elektrische Kontaktierung des Funktionselements 4 mit der zugeordneten Steuereinheit erfolgt, bevor die Fahrzeugscheibe 2 bestimmungsgemäß in dem Scheibenmitnehmer 8 gehaltert ist. Somit ist sichergestellt, dass bei bestimmungsgemäß verrasteter Fensterscheibe 2 eine elektrische Kontaktierung des Funktionselements 4 bereits erfolgt ist.

Zur bestimmungsgemäßen Montage der Fahrzeugscheibe 2 wird diese somit nach der Kopplung des Scheibensteckers 7 mit dem Gegenstecker 10 weiter in Richtung auf den Scheibenmitnehmer 8 geschoben, sodass die Schultern 36 des Scheibensteckers 7 weiter gegen die Feder 30 gedrückt werden, bis die zum Umschlagen der Feder 30 erforderliche Kraft überschritten wird. Dabei schlägt die Feder 30 von ihrer Anschlagsposition 32 in die Freigabeposition 34 um und der Scheibenstecker 7 sowie der Scheibenmitnehmer 8 bewegen sich weiter entlang der Montagerichtung 20, wobei eine Verrastung des Rastvorsprungs 18 mit dem Rastauge 12 erfolgt (vgl. Fig. 5 und Fig. 2).

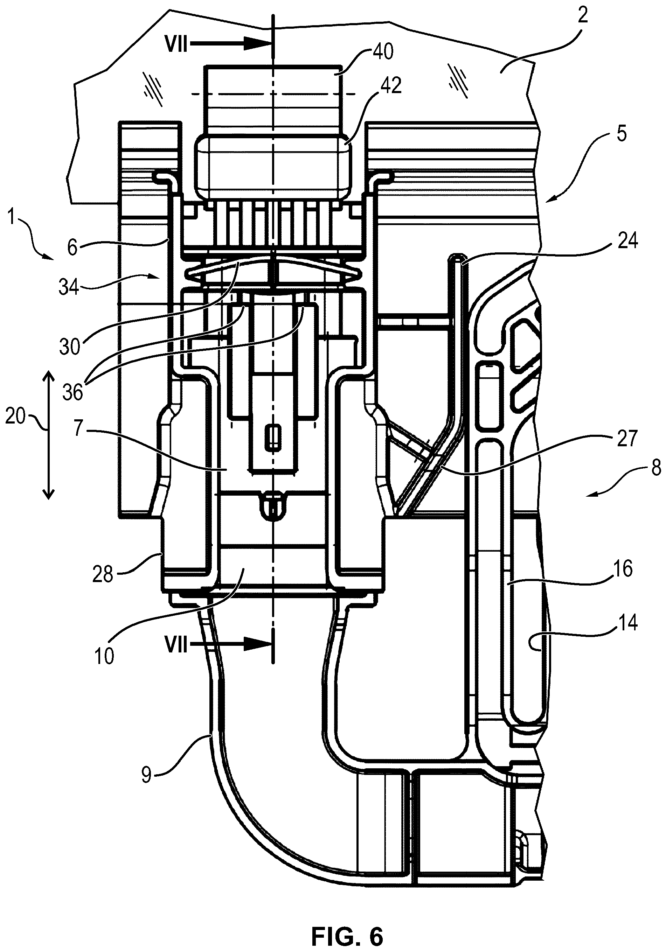

Wie aus Fig. 6 zu entnehmen ist, ist im bestimmungsgemäßen Montagezustand der Fahrzeugscheibe 2 durch das Umschlagen der Feder 30 in die Freigabeposition 34 ein Spiel zwischen den Schultern 36 und der Feder 30 entlang der Montagerichtung 20 gegeben, sodass Relativbewegungen zwischen der Fahrzeugscheibe 2 und dem Scheibenmitnehmer 8 ohne Einfluss auf die Verbindung zwischen dem Scheibenstecker 7 und dem Gegenstecker 10 bleiben.

Bei der Montage der Fensterscheibe 2 ergibt sich ein Kraft-Weg-Verlauf, der zunächst kaum ansteigt, bis der Scheibenstecker 7 an der Feder 30 anliegt. Dann steigt die zur weiteren Montage aufzubringende Kraft an, bis zunächst der Scheibenstecker 7 mit dem Gegenstecker 10 verrastet. Daraufhin steigt die Kraft weiter an bis anschließend (bei Erreichen der Montagekraft) die Feder 30 umschlägt, wobei auch der Scheibenadapter 5 mit dem Scheibenmitnehmer 8 verrastet. Beim Umschlagen der Feder 30 gibt diese außerdem knackfroschartig eine akustische Rückmeldung, konkret ein Knackgeräusch ab, die einem Monteur die bestimmungsgemäße Montage der Fahrzeugscheibe 2 signalisiert.

Um den Scheibenstecker 7 beweglich zu der Fahrzeugscheibe 2 lagern zu können, ist der Scheibenstecker 7 beweglich mit dem Funktionselement 4 kontaktiert. Dazu ist das Funktionselement 4 mit einem Folienleiter 40 kontaktiert, der zwischen den Scheibenelementen 3 aus der Fahrzeugscheibe 2 herausgeführt ist. Um eine Bewegung des Scheibensteckers 7 zu ermöglichen, ist der Folienleiter 40 mäanderförmig umgeschlagen, sodass eine "Schlapplänge" (nach Art eines Schlappseils) vorgehalten ist. Mittels eines Adapterstücks 42, das konkret einen "zero-insert-force-connector" bildet, ist der Folienleiter 40 mit den in dem Scheibenstecker 7 angeordneten Anschlusskontakten elektrisch verbunden. Um den Folienleiter 40 vor mechanischen Einflüssen sowie vor Umwelteinflüssen, konkret Feuchtigkeit, zu schützen, ist in Verlängerung zu dem Steckerschuh 6 eine Abdeckkappe 44 mit der scheibenseitigen Baugruppe, konkret mit dem Steckerschuh 6, verbunden. Diese Abdeckkappe 44 deckt den Folienleiter 40 dicht mit der Fahrzeugscheibe 2 ab.

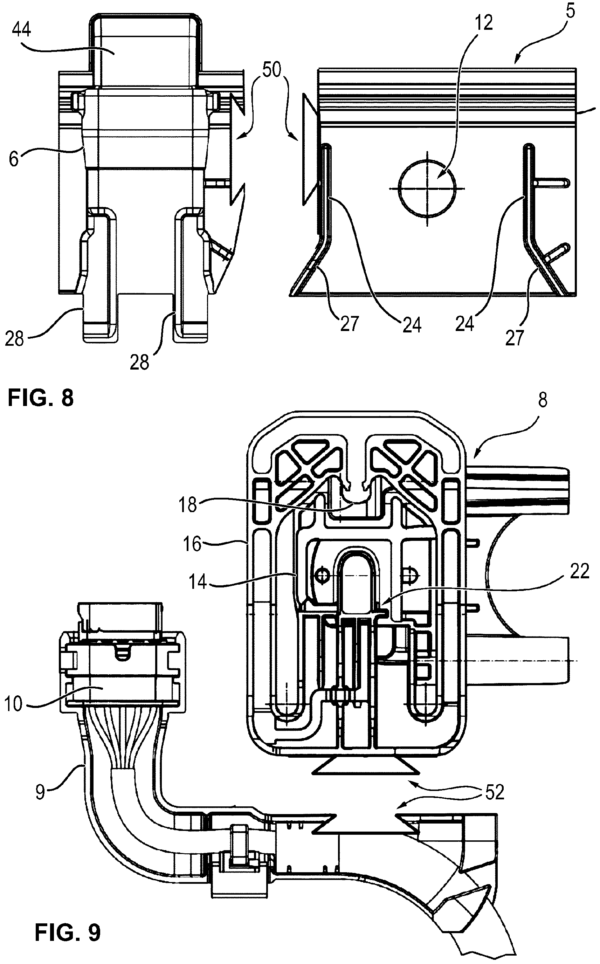

In Fig. 8 und Fig. 9 ist ein alternatives Ausführungsbeispiel der Befestigungsvorrichtung 1, konkret der scheibenseitigen Baugruppe sowie der fensterheberseitigen Baugruppe dargestellt. In beiden Fällen ist das der elektrischen Verbindung zugeordnete Bauelement der jeweiligen Baugruppe separat von dem zur mechanischen Verbindung genannten Bauelement ausgeführt. Das heißt, dass der Scheibenadapter 5 getrennt von dem Steckerschuh 6 (sowie der daran angeordneten Abdeckkappe 44) ausgeführt ist. Der Scheibenadapter 5 und der Steckerschuh 6 weisen jedoch zueinander komplementäre (schematisch angedeutete) Verbindungselemente 50 auf, mittels derer sie miteinander verbindbar sind (vgl. Fig. 8). Wie aus Fig. 9 zu erkennen ist, ist die fensterheberseitige Baugruppe entsprechend ausgebildet. Das heißt, dass der Scheibenmitnehmer 8 separat von dem Steckerhalter 9 ausgebildet ist, und dass beide jeweils zueinander komplementäre (schematisch angedeutete) Verbindungselemente 52 zur optionalen Kopplung des Steckerhalters 9 mit dem Scheibenmitnehmer 8 aufweisen.

Der Gegenstand der Erfindung ist nicht auf die vorstehend beschriebenen Ausführungsbeispiele beschränkt. Vielmehr können weitere Ausführungsformen der Erfindung von dem Fachmann abgeleitet werden, welche unter den durch die Ansprüche definierten Schutzumfang fallen.

### Bezugszeichenliste

- 1: Befestigungsvorrichtung
- 2: Fahrzeugscheibe
- 3: Scheibenelement
- 4: Funktionselement
- 5: Scheibenadapter
- 6: Steckerschuh
- 7: Scheibenstecker
- 8: Scheibenmitnehmer
- 9: Steckerhalter
- 10: Gegenstecker
- 12: Rastauge
- 14: Unterteil
- 16: Oberteil
- 18: Rastvorsprung
- 20: Montagerichtung
- 22: Anschlagschulter
- 24: Führungssteg
- 26: Führungsfläche
- 27: Auflaufschräge
- 28: Führungssteg
- 30: Feder
- 32: Anschlagposition
- 34: Freigabeposition
- 36: Schulter
- 40: Folienleiter
- 42: Adapterstück
- 44: Abdeckkappe
- 50: Verbindungselement
- 52: Verbindungselement

## Patentansprüche

1. Vorrichtung (1) zur Befestigung und elektrischen Kontaktierung einer Fahrzeug-Fensterscheibe (2), in die wenigstens ein elektrisches Funktionselement (4) integriert ist,
- mit einem Scheibenadapter (5), der zur Fixierung an der Fahrzeug-Fensterscheibe (2) eingerichtet ist,
- mit einem Scheibenhalter (8), der zur Kopplung des Scheibenadapters (5) mit einer Fahrzeugkarosserie eingerichtet ist,
- mit einem scheibenseitigen Stecker (7), der im bestimmungsgemäßen Montagezustand mit dem Funktionselement (4) der Fahrzeug-Fensterscheibe (2) elektrisch kontaktiert ist,
- mit einem scheibenseitigen Steckerschuh (6) zur Lagerung des scheibenseitigen Steckers (7) an der Fahrzeug-Fensterscheibe (2),
- mit einem Gegenstecker (10), der dazu eingerichtet ist, zur elektrischen Kontaktierung des Funktionselements (4) mit einer Steuereinheit mit dem scheibenseitigen Stecker (7) gekoppelt zu werden,
wobei der Scheibenadapter (5) und der scheibenseitige Steckerschuh (6) sowie der Scheibenhalter (8) und ein den Gegenstecker (10) lagernder Steckerhalter (9) derart kinematisch gekoppelt sind, dass bei einer Montage der Fahrzeug-Fensterscheibe (2) mittels des Scheibenadapters (5) an dem Scheibenhalter (8) der scheibenseitige Stecker (7) mit dem Gegenstecker (10) verbunden wird, **dadurch gekennzeichnet, dass** an dem scheibenseitigen Steckerschuh (6) oder an dem Steckerhalter (9) ein nachgiebiges Anschlagelement (30) angeordnet ist, das dazu eingerichtet ist, bei der Montage eine Kopplungskraft zur bestimmungsgemäßen Kopplung des scheibenseitigen Steckers (7) mit dem Gegenstecker (10) aufzubringen, und wobei der scheibenseitige Stecker (7) und der Gegenstecker (10) im bestimmungsgemäßen Montagezustand spielbehaftet an dem scheibenseitigen Steckerschuh (6) oder dem Steckerhalter (9) gelagert sind.

2. Vorrichtung (1) nach Anspruch 1,
wobei das nachgiebige Anschlagelement (30) derart ausgebildet ist, dass die Kopplungskraft zur bestimmungsgemäßen Kopplung des scheibenseitigen Steckers (7) mit dem Gegenstecker (10) geringer ist, als eine zum Erreichen des bestimmungsgemäßen Montagezustands der Fahrzeug-Fensterscheibe (2) an der Fahrzeugkarosserie erforderliche Montagekraft.

3. Vorrichtung (1) nach Anspruch 2,
wobei der Scheibenadapter (5) und der Scheibenhalter (8) derart gestaltet sind, dass bei Erreichen der erforderlichen Montagekraft eine Verrastung zwischen dem Scheibenadapter (5) und dem Scheibenhalter (8) ausgebildet wird.

4. Vorrichtung (1) nach einem der Ansprüche 1 bis 3,
wobei das nachgiebige Anschlagelement (30) dazu eingerichtet ist, zur Signalisierung des bestimmungsgemäßen Montagezustands der Fahrzeug-Fensterscheibe (2) an der Fahrzeugkarosserie eine akustische und/oder haptische Rückmeldung auszugeben.

5. Vorrichtung (1) nach einem der Ansprüche 1 bis 4,
wobei das nachgiebige Anschlagelement (30) derart ausgebildet ist, dass im bestimmungsgemäßen Montagezustand der Fahrzeug-Fensterscheibe (2) an der Fahrzeugkarosserie die spielbehaftete Lagerung des scheibenseitigen Steckers (7) und des Gegensteckers (10) entlang einer Montagerichtung (20) der Fahrzeug-Fensterscheibe (2) näherungsweise kraftfrei ist.

6. Vorrichtung (1) nach einem der Ansprüche 1 bis 5,
wobei es sich bei dem Anschlagelement um eine Feder (30) handelt.

7. Vorrichtung (1) nach Anspruch 6,
wobei die Feder (30) bistabil ausgebildet ist.

8. Vorrichtung (1) nach einem der Ansprüche 1 bis 7,
wobei der Scheibenadapter (5) einteilig mit dem scheibenseitigen Steckerschuh (6) und der Scheibenhalter (8) einteilig mit dem Steckerhalter (9) für den Gegenstecker (10) verbunden sind.

9. Vorrichtung (1) nach einem der Ansprüche 1 bis 8,
wobei der scheibenseitige Stecker (7) im bestimmungsgemäßen Montagezustand derart mit dem Funktionselement (4) der Fahrzeug-Fensterscheibe (2) elektrisch kontaktiert ist, dass eine Relativbewegung zwischen der Fahrzeug-Fensterscheibe (2) und dem scheibenseitigen Stecker (7) möglich ist.

10. Vorrichtung (1) nach einem der Ansprüche 1 bis 9,
wobei der Scheibenadapter (5) und/oder der Scheibenhalter (8) wenigstens einen Führungssteg (24) mit einer oder mehreren Auflaufschrägen (27) zur Zentrierung des Scheibenadapters (5) zu dem Scheibenhalter (8) bei der Montage aufweist.

11. Vorrichtung (1) nach einem der Ansprüche 1 bis 10,
wobei der Scheibenhalter (8) zur beweglichen Kopplung der Fahrzeug-Fensterscheibe (2) mit der Fahrzeugkarosserie eingerichtet ist.

## Claims

1. Device (1) for fastening and electrical contacting a vehicle window pane (2), in which at least one electrical functional element (4) is integrated,
- with a pane adapter (5) that is constructed for fixing on the vehicle window pane (2),
- with a pane holder (8) that is constructed for coupling the pane adapter (5) with a vehicle body,
- with a pane-side plug (7) that, in the intended assembled state, establishes electrical contact with the functional element (4) of the vehicle window pane (2),
- with a pane-side coupling shoe (6) for mounting the pane-side plug (7) on the vehicle window pane (2),
- with a mating plug (10) that is constructed to be coupled with the pane-side plug (7) for the electrical contacting of the functional element (4) with a control unit,
wherein the pane adapter (5) and the pane-side coupling shoe (6) as well as the pane holder (8) and a plug holder (9) supporting the mating plug (10) are kinematically coupled such that during assembly of the vehicle window pane (2) using the pane adapter (5) on the pane holder (8), the pane-side plug (7) is connected to the mating plug (10), **characterized in that**, on the pane-side coupling shoe (6) or on the plug holder (9), an elastic stop element (30) is arranged that is constructed for the purpose of applying, during assembly, a coupling force for the intended coupling of the pane-side plug (7) with the mating plug (10), and wherein the pane-side plug (7) and the mating plug (10), in the intended assembled state, are mounted with play on the pane-side coupling shoe (6) or the plug holder (9).

2. Device (1) according to claim 1,
wherein the elastic stop element (30) is implemented such that the coupling force for the intended coupling of the pane-side plug (7) with the mating plug (10) is less than an assembly force required to achieve the intended assembled state of the vehicle window pane (2) on the vehicle body.

3. Device (1) according to claim 2,
wherein the pane adapter (5) and the pane holder (8) are designed such that upon achieving the required assembly force, latching between the pane adapter (5) and the pane holder (8) is implemented.

4. Device (1) according to one of claims 1 through 3,
wherein the elastic stop element (30) is constructed to emit acoustic and/or haptic feedback for signaling the intended assembled state of the vehicle window pane (2) on the vehicle body.

5. Device (1) according to one of claims 1 through 4,
wherein the the elastic stop element (30) is implemented such that, in the intended assembled state of the vehicle window pane (2) on the vehicle body, the mounting, with play, of the pane-side plug (7) and the mating plug (10) is virtually without force along an assembly direction (20) of the vehicle window pane (2).

6. Device (1) according to one of claims 1 through 5,
wherein the stop element is a spring (30).

7. Device (1) according to claim 6,
wherein the spring (30) is bistable.

8. Device (1) according to one of claims 1 through 7,
wherein the pane adapter (5) is integrally connected to the pane-side coupling shoe (6) and the pane holder (8) is integrally connected to the plug holder (9) for the mating plug (10).

9. Device (1) according to one of claims 1 through 8,
wherein the pane-side plug (7), in the intended assembled state, establishes electrical contact with the functional element (4) of the vehicle window pane (2) such that a relative movement between the vehicle window pane (2) and the pane-side plug (7) is possible.

10. Device (1) according to one of claims 1 through 9,
wherein the pane adapter (5) and/or the pane holder (8) has at least one guide web (24) with one or a plurality of abutting inclines (27) for centering the pane adapter (5) relative to the pane holder (8) during assembly.

11. Device (1) according to one of claims 1 through 10,
wherein the pane holder (8) is constructed for
movable coupling of the vehicle window pane (2) with the vehicle body.

## Revendications

1. Dispositif (1) destiné à la fixation et à la mise en contact électrique d'une vitre de véhicule (2) dans laquelle au moins un élément fonctionnel électrique (4) est intégré,
- comportant un adaptateur de vitre (5), qui est apte à être fixé sur la vitre de véhicule (2) ;
- comportant un support de vitre (8), qui est apte à accoupler l'adaptateur de vitre (5) avec une carrosserie de véhicule ;
- comportant un connecteur côté vitre (7), qui est, dans l'état de montage prévu, en contact électrique avec l'élément fonctionnel (4) de la vitre de véhicule (2) ;
- comportant une cosse de connecteur côté vitre (6) destinée au montage du connecteur côté vitre (7) sur la vitre de véhicule (2) ;
- comportant un connecteur homologue (10), qui est apte à être accouplé avec le connecteur côté vitre (7) pour la mise en contact électrique de l'élément fonctionnel (4) avec une unité de commande ;
dans lequel l'adaptateur de vitre (5) et la cosse de connecteur côté vitre (6) ainsi que le support de vitre (8) et un support de connecteur (9), supportant le connecteur homologue (10), sont accouplés cinématiquement de telle sorte que, lors d'un montage de la vitre de véhicule (2) au moyen de l'adaptateur de vitre (5) sur le support de vitre (8), le connecteur côté vitre (7) est relié au connecteur homologue (10), **caractérisé par le fait que**, sur la cosse de connecteur côté vitre (6) ou sur le support de connecteur (9), est disposé un élément d'arrêt flexible (30) qui est apte à appliquer lors du montage une force d'accouplement destinée à l'accouplement prévu du connecteur côté vitre (7) avec le connecteur homologue (10), et le connecteur côté vitre (7) et le connecteur homologue (10) étant, dans l'état de montage prévu, montés avec jeu sur la cosse de connecteur côté vitre (6) ou sur le support de connecteur (9).

2. Dispositif (1) selon la revendication 1,
dans lequel l'élément d'arrêt flexible (30) est configuré de telle sorte que la force d'accouplement destinée à l'accouplement prévu du connecteur côté vitre (7) avec le connecteur homologue (10) est inférieure à une force de montage nécessaire pour atteindre l'état de montage prévu de la vitre de véhicule (2) sur la carrosserie de véhicule.

3. Dispositif (1) selon la revendication 2,
dans lequel l'adaptateur de vitre (5) et le support de vitre (8) sont conçus de telle sorte que, lorsque la force de montage nécessaire est atteinte, un encliquetage entre l'adaptateur de vitre (5) et le support de vitre (8) est formé.

4. Dispositif (1) selon l'une des revendications 1 à 3,
dans lequel l'élément d'arrêt flexible (30) est configuré pour délivrer une rétroaction acoustique et/ou haptique pour la signalisation de l'état de montage prévu de la vitre de véhicule (2) sur la carrosserie de véhicule.

5. Dispositif (1) selon l'une des revendications 1 à 4,
dans lequel l'élément d'arrêt flexible (30) est configuré de telle sorte que, dans l'état de montage prévu de la vitre de véhicule (2) sur la carrosserie de véhicule, le montage avec jeu du connecteur côté vitre (7) et du connecteur homologue (10) le long d'une direction de montage (20) de la vitre de véhicule (2) est sensiblement sans force.

6. Dispositif (1) selon l'une des revendications 1 à 5,
dans lequel l'élément d'arrêt est un ressort (30) .

7. Dispositif (1) selon la revendication 6,
dans lequel le ressort (30) est conçu bistable.

8. Dispositif (1) selon l'une des revendications 1 à 7,
dans lequel l'adaptateur de vitre (5) est relié d'un seul tenant avec la cosse de connecteur côté vitre (6) et le support de vitre (8) est relié d'un seul tenant avec le support de connecteur (9) du connecteur homologue (10).

9. Dispositif (1) selon l'une des revendications 1 à 8,
dans lequel le connecteur côté vitre (7), dans l'état de montage prévu, est en contact électrique avec l'élément fonctionnel (4) de la vitre de véhicule (2) de telle sorte qu'un déplacement relatif entre la vitre de véhicule (2) et le connecteur côté vitre (7) est possible.

10. Dispositif (1) selon l'une des revendications 1 à 9,
dans lequel l'adaptateur de vitre (5) et/ou le support de vitre (8) présente(nt) au moins une nervure de guidage (24) ayant une ou plusieurs rampes inclinées (27) pour le centrage de l'adaptateur de vitre (5) par rapport au support de vitre (8) lors du montage.

11. Dispositif (1) selon l'une des revendications 1 à 10,
dans lequel le support de vitre (8) est configuré pour l'accouplement mobile de la vitre de véhicule (2) à la carrosserie de véhicule.
